# EUROPÄISCHE PATENTSCHRIFT

(11) **EP 3 903 154 B1**
(45) Veröffentlichungstag und Bekanntmachung des Hinweises auf die Patenterteilung: **19.06.2024**
(21) Anmeldenummer: 20706392.6
(22) Anmeldetag: 06.02.2020
(51) Int. Cl.: G05B 15/02

(54) **VERFAHREN ZUR ERMITTLUNG EINES THERMISCHEN VERBRAUCHES EINES ENERGIESYSTEMS, ENERGIEMANAGEMENTSYSTEM SOWIE ENERGIESYSTEM**
METHOD FOR DETERMINING A THERMAL CONSUMPTION OF AN ENERGY SYSTEM, ENERGY MANAGEMENT SYSTEM AND ENERGY SYSTEM
PROCÉDÉ DE DÉTERMINATION D'UNE CONSOMMATION THERMIQUE D'UN SYSTÈME D'ÉNERGIE, SYSTÈME DE GESTION D'ÉNERGIE AINSI QUE SYSTÈME D'ÉNERGIE

(30) Priorität: 22.02.2019 DE 102019202440
(43) Veröffentlichungstag der Anmeldung: 03.11.2021
(73) Patentinhaber: Siemens Aktiengesellschaft, 80333 München (DE)
(72) Erfinder: BAUMGÄRTNER, Thomas, 91056 Erlangen (DE); KAUTZ, Martin, 91056 Erlangen (DE); WAGNER, Lisa, 90475 Nürnberg (DE)
(74) Vertreter: Siemens Patent Attorneys
(86) Internationale Anmeldenummer: PCT/EP2020/052980
(87) Internationale Veröffentlichungsnummer: WO 2020/169353

(56) Entgegenhaltungen:
- DE-A1-102017 112 505
- US-A1- 2017 212 488
- US-A1- 2019 032 943

## Beschreibung

Die Erfindung betrifft ein Verfahren zur Ermittlung eines thermischen Verbrauches eines Energiesystems mit einem thermischen Energiespeicher, wobei das Energiesystems eine thermische Gesamtenergie wenigstens innerhalb eines Zeitbereiches erzeugt. Weiterhin betrifft die Erfindung ein Energiemanagementsystem zum Betrieb eines solchen Energiesystems und/oder zur Vorhersage eines thermischen Verbrauches des Energiesystems. Ferner betrifft die Erfindung ein Energiesystem mit einem solchen Energiemanagementsystem.

Energiesysteme, insbesondere multimodale Energiesysteme, mit einem Energiemanagementsystem haben zukünftig eine immer größere Bedeutung. Insbesondere ist das Energiemanagementsystem ein Teil von allgemeinen Automatisierungssystemen für Großgebäude oder Inselnetze (englisch: Microgrid).

Das Automationssystem ist hierbei zur Steuerung/Regelung der Komponenten des Energiesystems, beispielsweise Batterien, Wärmepumpen, thermische Energiespeicher, vorgesehen. Grundsätzlich umfasst ein solches Automationssystem mehrere Ebenen, insbesondere eine Managementebene, eine Automationsebene sowie eine Feldebene. Weiterhin kann das Automatisierungssystem ein Energiemanagementsystem umfassen. Hierbei ist das Energiemanagementsystem im Wesentlichen für die energieeffiziente Steuerung/Regelung der Komponenten des Energiesystems, für den Schutz der Komponenten, sowie der Bereitstellung eines bestimmten Komforts, beispielsweise der Innentemperatur von Räumen, vorgesehen.

Typische Energiemanagementsysteme können den Einkauf aller extern bezogenen Energieformen, beispielsweise von Gas, Strom, Fernwärme oder Fernkälte optimieren. Hierzu ist ein Lastprofil der zugehörigen Energieform erforderlich. Für elektrische Verbräuche kann dies ein historisches beziehungsweise gemessenes Lastprofil oder ein auf Annahmen basierendes berechnetes Lastprofil sein. Hierbei wird die Summe aller Verbraucher bezüglich der elektrischen Energie gemessen und der elektrische Verbrauch abgeschätzt.

Der Anmelderin sind keine synthetischen Lastprofile bezüglich thermischer Verbräuche, insbesondere in Bezug auf den Verbrauch von Wärme und/oder Kälte, bekannt, die für ein Energiemanagementsystem verwendbar sind. Insbesondere kann der thermische Verbrauch des Energiesystems beziehungsweise eines Verbrauchers innerhalb des Energiesystems nicht ohne direkte Messung bestimmt werden. Allerdings können thermische Verbräuche typischerweise nicht direkt gemessen werden, da dies bautechnisch und/oder aufgrund von Mieterrechten schwierig bis unmöglich ist. Somit kann im Gegensatz zu elektrischen Verbräuchen kein realistisches thermisches Lastprofil bereitgestellt werden und somit keine realistische thermische Verbrauchsprognose (Vorhersage der thermischen Last) durch das Energiemanagementsystem bestimmt werden. Dies gilt insbesondere dann, wenn das Energiesystem einen thermischen Energiespeicher umfasst.

Aus dem Dokument DE 102017112505 A1 ist ein Verfahren zum Betreiben eines thermischen Verbrauchssystems bekannt, bei welchem eine Gasheizung an ein thermisches Energiemengentransportnetz gekoppelt ist. Weiterhin offenbart das Dokument mehrere Messeinrichtungen, die jeweils verschiedene Messwerte erfassen.

Die Dokumente US 2019/032943 A1 sowie US 2017/212488 A1 betreffen grundsätzliche Vorrichtungen und grundsätzliche Verfahren zum Betrieb eines Energiesystems (Energiemanagementsysteme).

Der vorliegenden Erfindung liegt die Aufgabe zugrunde, die Ermittlung eines thermischen Verbrauches eines Energiesystems, insbesondere im Hinblick für Vorhersagen durch ein Energiemanagementsystem des Energiesystems, zu verbessern.

Die Aufgabe wird durch ein Verfahren mit den Merkmalen des unabhängigen Patentanspruches 1, durch ein Energiemanagementsystem mit den Merkmalen des unabhängigen Patentanspruches 8, sowie durch ein Energiesystem mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Ermittlung eines thermischen Verbrauches eines Energiesystems mit einem thermischen Energiespeicher, wobei das Energiesystems eine thermische Gesamtenergie wenigstens innerhalb eines Zeitbereiches erzeugt, umfasst wenigstens die folgenden Schritte:
- Erfassen einer thermischen Ladeenergie des thermischen Energiespeichers innerhalb des Zeitbereiches;
- Erfassen einer thermischen Entladeenergie des thermischen Energiespeichers innerhalb des Zeitbereiches; und
- Berechnen des thermischen Verbrauches innerhalb des Zeitbereiches mittels wenigstens einer Summe aus der thermischen Gesamtenergie und der Differenz zwischen der erfassten thermischen Entladeenergie und der erfassten thermischen Ladeenergie.

Der thermische Verbrauch kann ein Wärmeverbrauch und/oder Kälteverbrauch sein.

Gemäß der vorliegenden Erfindung ist ein thermischer Energiespeicher jede Vorrichtung, die eine Speicherung und/oder Zwischenspeicherung von thermischer Energie, insbesondere Wärme und/oder Kälte, ermöglicht. Erfindungsgemäß ist der thermische Energiespeicher wenigstens teilweise durch ein thermisches Netz des Energiesystems ausgebildet.

Gemäß der vorliegenden Erfindung wird der thermische Verbrauch dadurch ermittelt, dass die Ladeenergien und Entladeenergien am thermischen Energiespeicher (oder Wärmespeicher) gemessen werden und diese als Ersatzwerte entsprechend der Approximation *E*_{Thermisch} = *E*_{Gesamt} + *E*_{Entladen} - *E*_{Laden} verwendet werden. Hierbei bezeichnet *E*_{Gesamt} die erzeugte thermische Gesamtenergie innerhalb des Zeitbereiches, *E*_{Entladen} die Entladeenergie des thermischen Energiespeichers innerhalb des Zeitbereiches, *E*_{Laden} die Ladenergie des thermischen Energiespeichers innerhalb des Zeitbereiches und *E*_{Thermisch} den thermischen Verbrauch des Energiesystems innerhalb des Zeitbereiches. Für einen festen Zeitbereich, innerhalb welchem die zugehörige Leistungen annähernd als konstant angesehen werden können, kann die obige Gleichung ebenfalls mittels der zugehörigen Leistungen *P*_{Thermisch} = *P*_{Gesamt} + *P*_{Entladen} - *P*_{Laden} formuliert werden. Dies ist der vorliegenden Erfindung äquivalent. Ein Vorteil der vorliegenden Erfindung ist, dass der thermische Verbrauch ohne direkte Messung realitätsnah approximiert wird. Darauf wird ein verbessertes thermisches Lastprofil beziehungsweise Wärmeabnahmeprofil oder Wärmeverbrauchsprofil für ein Energiemanagementsystem bereitgestellt.

Insbesondere ist die vorliegende Erfindung für kleinere thermische Netze vorteilhaft. Das ist deshalb der Fall, da ein Energiemanagementsystem ohne größeren Aufwand in ein bestehendes Energiesystem integriert werden kann. Hierbei ist ein thermisches Netz eine Vorrichtung, die wenigstens einen thermischen Verbraucher mit wenigstens einem thermischen Erzeuger thermisch koppelt, beispielsweise mittels eines Wärmeträgermediums. Die vorliegende Erfindung ist insbesondere für Energiesysteme von Vorteil, die als Gebäude oder multimodale Inselnetze ausgebildet sind.

Das erfindungsgemäße Energiemanagementsystem zum Betrieb eines Energiesystems und/oder zur Vorhersage eines thermischen Verbrauches des Energiesystems, wobei das Energiesystem wenigstens einen thermischen Energiespeicher aufweist, und mittels des Energiesystems wenigstens eine thermische Gesamtenergie wenigstens innerhalb eines Zeitbereiches erzeugbar ist, umfasst wenigstens
- Mittel zum Erfassen einer thermischen Ladeenergie des thermischen Energiespeichers innerhalb des Zeitbereiches;
- Mittel zum Erfassen einer thermischen Entladeenergie des thermischen Energiespeichers innerhalb des Zeitbereiches; und
- Mittel zum Berechnen des thermischen Verbrauches innerhalb des Zeitbereiches mittels einer Summe aus der thermischen Gesamtenergie und der Differenz zwischen der erfassten thermischen Entladeenergie und der erfassten thermischen Ladeenergie.

Erfindungsgemäß ist der thermische Energiespeicher wenigstens teilweise durch ein thermisches Netz des Energiesystems ausgebildet.

Das erfindungsgemäße Energiesystem ist dadurch gekennzeichnet, dass dieses ein Energiemanagementsystem gemäß der vorliegenden Erfindung und/oder einer ihrer Ausgestaltungen umfasst.

Es ergeben sich zum erfindungsgemäßen Verfahren gleichartige und gleichwertige Vorteile des erfindungsgemäßen Energiemanagementsystems und der erfindungsgemäßen Energiesystems.

Gemäß einer vorteilhaften Ausgestaltung der Erfindung wird das Energiesystem basierend auf den ermittelten thermischen Verbrauch betrieben.

Dadurch wird vorteilhafterweise die energetische Effizienz des Energiesystems, insbesondere bezüglich thermischer Erzeugung und Verbrauch, verbessert.

In einer vorteilhaften Ausgestaltung der Erfindung wird der thermische Verbrauch mittels eines Energiemanagementsystems ermittelt, wobei der Betrieb des Energiesystems durch das Energiemanagementsystem erfolgt.

Mit anderen Worten umfasst das Energiesystem das Energiemanagementsystem, welches dazu ausgebildet ist, das Energiesystem basierend auf dem ermittelten Verbrauch zu betreiben. Hierzu kann das Energiesystem zur Ermittlung beziehungsweise Berechnung des thermischen Verbrauches gemäß der vorliegenden Erfindung und/oder einer ihrer Ausgestaltungen ausgebildet sein.

Gemäß einer vorteilhaften Ausgestaltung der Erfindung wird der berechnete thermische Verbrauch als thermisches Lastprofil für eine thermische Lastvorhersage des Energiemanagementsystems verwendet.

Dadurch wird vorteilhafterweise eine realitätsnahe Vorhersage des thermischen Lastprofils ermöglicht. Dadurch wird die energetische Effizienz des Energiesystems, welches mittels des Energiemanagementsystems betrieben wird, weiter verbessert. Das ist deshalb der Fall, da eine verbesserte Prognose bezüglich des thermischen Verbrauchs durch die vorliegende Erfindung bereitgestellt wird. Mit anderen Worten wird vorteilhafterweise die Vorhersagegüte des Energiemanagementsystems verbessert. Das ist insbesondere deshalb der Fall, da die thermische Lastvorhersage nicht auf simulierten thermischen Lastprofilen basiert, sondern erfindungsgemäß auf den erfassten Entladeenergien und Ladeenergien des thermischen Energiespeichers, beispielsweise auf dem an Rohrleitungen des thermischen Energiespeichers erfassten Energiespeicherverhalten des thermischen Energiespeichers.

In einer vorteilhaften Ausgestaltung der Erfindung wird der ermittelte thermische Verbrauch vor seiner Verwendung als thermisches Lastprofil zeitlich geglättet.

Das ist deshalb von Vorteil, da typischerweise die erfassten Entladeenergien und Ladeenergien relativ große Schwankungen aufweisen können. Dies ist insbesondere dann der Fall, wenn diese an einem Vorlauf und Rücklauf des thermischen Energiespeichers erfasst werden. Durch die Glättung, beispielsweise mittels eines über zwei Stunden gleitenden Mittelwerts, wird ein glatteres und somit verbessertes thermisches Lastprofil bereitgestellt, welches insbesondere zu einer verbesserten Vorhersage des thermischen Verbrauchs führt.

Gemäß der Erfindung wird der thermische Energiespeicher wenigstens teilweise durch ein thermisches Netz des Energiesystems ausgebildet.

Mit anderen Worten ist der thermische Energiespeicher wenigstens teilweise, insbesondere vollständig, als thermisches Netz des Energiesystems ausgebildet. Es wird somit das thermische Netz wenigstens teilweise als thermischer Energiespeicher angesehen beziehungsweise aufgefasst. Hierbei umfasst das Energiesystem wenigstens einen Teil des thermischen Netzes. Große thermischen Netze von kommerziellen Gebäuden, von Campussen oder von multimodalen Inselnetzen, weisen typischerweise ein großes Volumen ihres Wärmeträgermediums auf. Dadurch können diese bezüglich ihrer thermischen Speichereigenschaften nicht vernachlässigt werden. Es ist daher von Vorteil, das thermische Netz als thermischen Energiespeicher anzusehen. Die vorliegende Erfindung ermöglicht es daher den thermischen Verbrauch des thermischen Netzes analog zu einem thermischen Energiespeicher, beispielsweise wie obenstehend beschrieben, zu ermitteln. Dadurch kann vorteilhafterweise der thermische Verbrauch eines großen thermischen Netzes ermittelt werden und die Ermittlung des thermischen Verbrauches verbessert werden.

In einer vorteilhaften Weiterbildung der Erfindung wird die Entladeenergie und/oder Ladeenergie des thermischen Netzes durch eine Berücksichtigung des Volumens und/oder Temperatur eines Vorlaufes und eines Rücklaufes des thermischen Netzes erfasst.

Mit anderen Worten weist das thermische Netz einen Vorlauf und/oder einen Rücklauf für sein Wärmeträgermedium, beispielsweise für Wasser, auf. Hierbei werden die Entladeenergien und/oder Ladeenergien des thermischen Netzes in Abhängigkeit des Volumens und/oder Temperatur seines Vorlaufes und/oder Rücklaufes bestimmen. Dadurch kann eine vorteilhafte Approximation für den thermischen Verbrauch bereitgestellt werden. Insbesondere wird dadurch eine verbesserte Vorhersage des thermischen Verbrauchs ermöglicht. Beispielsweise ist eine grobe Abschätzung der Wassermenge in einem Heizungssystem (thermisches Netz) und eine Kenntnis über die Toleranzen der Vorlauftemperaturen und Rücklauftemperaturen ausreichend. Mit Kenntnis der genannten Größen lässt sich ein optimierter Betrieb des Energiesystems, insbesondere mittels eines Energiemanagementsystems, basierend auf den ermittelten thermischen Verbrauch erreichen. Hierbei können die genannten Temperaturen am Vorlauf beziehungsweise Rücklauf gemessen werden. Der ermittelte thermische Verbrauch kann als Wärmeerzeugungsprofil bei einer Vorhersage des Energiemanagementsystems berücksichtigt werden. Mit anderen Worten werden schwankende Vorlauftemperaturen und/oder Rücklauftemperaturen als thermischer Energiespeicher erkannt und können bei der Optimierung mittels des Energiemanagementsystems berücksichtigt werden.

Gemäß einer vorteilhaften Ausgestaltung der Erfindung wird die thermische Ladeenergie des thermischen Netzes und/oder die thermische Entladeenergie durch ein Erfassen eines Temperaturunterschiedes zwischen zwei verschiedenen Zeitpunkten erfasst.

Mit anderen Worten wird die thermische Ladeenergie beziehungsweise thermische Entladeenergie jeweils mittels [*T*(*t*₁) - *T*(*t*₂)] · *c* · *V* · *ρ* berechnet. Hierbei bezeichnet *T*(*t*₁) die Temperatur zum Zeitpunkt *t*₁, beispielsweise des Vorlaufes oder Rücklaufes, *T*(*t*₂) die Temperatur zum Zeitpunkt *t*₂, beispielsweise des Vorlaufes oder Rücklaufes, *c* die spezifische Wärmekapazität des Wärmeträgermediums des thermischen Netzes, *V* das Volumen des Wärmeträgermediums und *ρ* die Dichte des Wärmeträgermediums.

Weitere Vorteile, Merkmale und Einzelheiten der Erfindung ergeben sich aus dem im Folgenden beschriebenen Ausführungsbeispielen sowie anhand der Zeichnungen. Dabei zeigen schematisiert:
- Figur 1: ein Energiesystem nach dem Stand der Technik;
- Figur 2: ein Energiesystem gemäß einer Ausgestaltung der vorliegenden Erfindung; und
- Figur 3: einen thermischen Verbrauch, der mittels einer Ausgestaltung der vorliegenden Erfindung ermittelt wurde.

Gleichartige, gleichwertige oder gleichwirkende Elemente können in einer der Figuren oder in den Figuren mit denselben Bezugszeichen versehen sein.

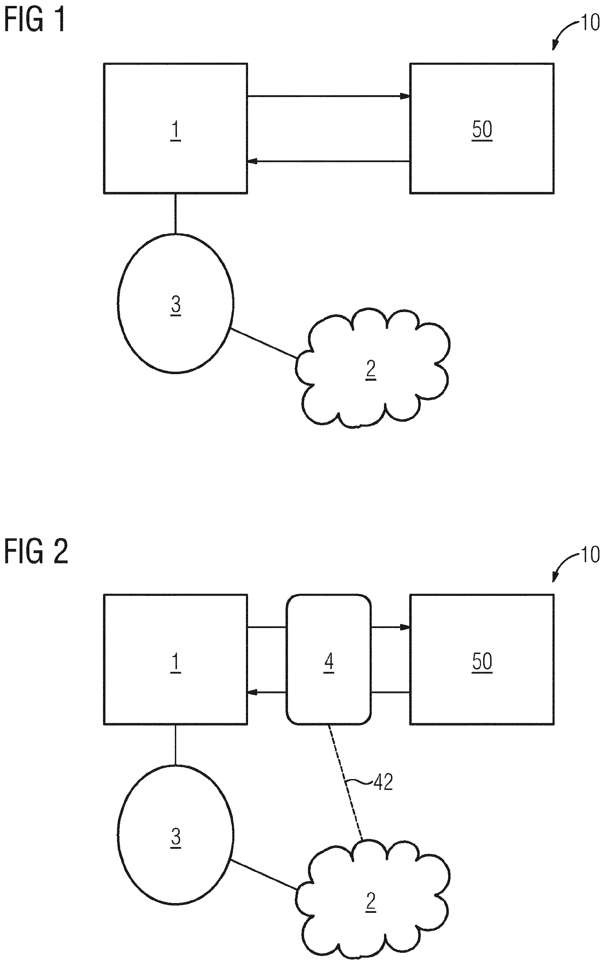

Die Figur 1 zeigt ein bekanntes Energiesystem 10.

Hierbei umfasst das Energiesystem 10 Komponenten 1 (thermische Erzeuger), die eine thermische Gesamtenergie bereitstellen. Die thermische Gesamtenergie wird ebenfalls mit dem Bezugszeichen 1 gekennzeichnet.

Weiterhin umfasst das Energiesystem 10 ein Energiemanagementsystem 2. Das Energiemanagementsystem 2 kann mittels einer direkte Messung 3 die thermische Gesamtenergie 1 erfassen.

Weiterhin umfasst das Energiesystem 10 Komponenten 50 (thermische Verbraucher), die wenigstens einen Teil der erzeugten thermischen Gesamtenergie verbrauchen. Dieser thermische Verbrauch wird ebenfalls mit dem Bezugszeichen 50 gekennzeichnet.

Typischerweise sind die thermischen Erzeuger 1 mittels eines thermischen Netzes mit den thermischen Verbrauchern 50 thermisch gekoppelt. Diese thermische Kopplung ist durch die Pfeile zwischen den thermischen Erzeugern 1 und thermischen Verbrauchern 50 symbolisiert. Die Richtung dieser Pfeile deutet einen Vorlauf und Rücklauf des thermischen Netzes für ein Wärmeträgermedium, beispielsweise Wasser, des thermischen Netzes an. Nach dem Stand der Technik ist das thermische Netz nicht Bestandteil der Messung des Energiesystems 2. Mit anderen Worten erfasst des Energiesystem 2 lediglich die thermische Gesamtenergie durch die direkte Messung 3.

Die Figur 2 veranschaulicht ein Energiesystem 10, bei welchem das thermische Netz zwischen den thermischen Erzeugern 1 und den thermischen Verbrauchern 50 als thermischer Energiespeicher 4 angesehen wird. Mit anderen Worten bildet das thermische Netz zwischen den thermischen Erzeugern 1 und den thermischen Verbrauchern 50 den thermischen Energiespeicher 4 aus. Weiterhin kann eine direkte Messung 3 der thermischen Gesamterzeugung durch ein Energiemanagementsystem 2 des Energiesystems 10 erfolgen.

Gemäß vorliegenden Erfindung wird der thermische Verbrauch nicht ausschließlich durch die direkte Messung 3 erfasst, sondern durch ein Erfassen 42 (Messen) der thermischen Ladeenergien und Entladeenergien des thermischen Energiespeichers 4, das heißt des thermischen Netzes. Dadurch können vorteilhafterweise die Speichereigenschaften des thermischen Netzes bei der Ermittlung des thermischen Verbrauches durch das Energiemanagementsystem 2 berücksichtigt werden. Der thermische Verbrauch wird dann durch die Summe aus thermischer Gesamterzeugung der Erzeuger 1 und der Differenz zwischen der erfassten thermischen Entladeenergie und erfassten thermische Ladeenergie bestimmt. Hierbei wird das thermische Netz erfindungsgemäß als thermischer Energiespeicher 4 angesehen. Die Ladeenergien beziehungsweise Entladeenergien können jeweils am Vorlauf beziehungsweise Rücklauf des thermischen Netzes beziehungsweise des thermischen Energiespeichers 4 erfasst werden.

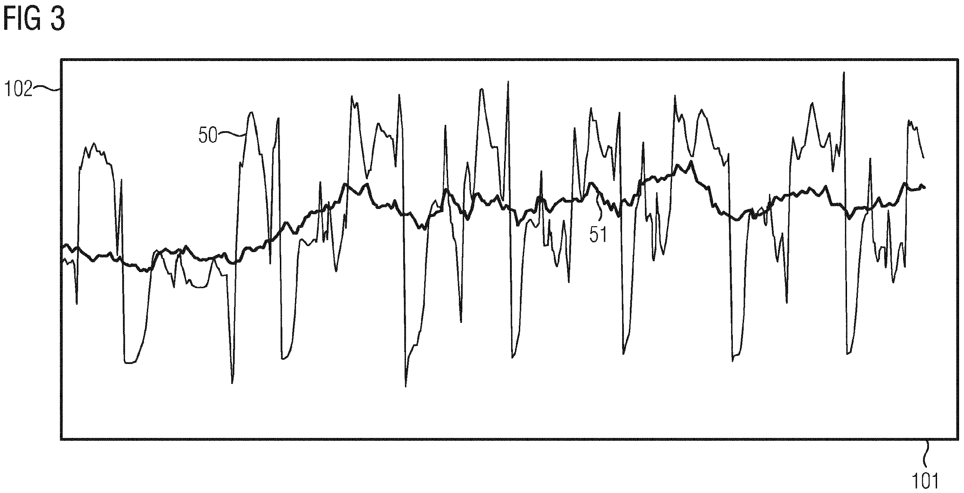

Die Figur 3 zeigt einen gemäß der Figur 2 am thermische Energiespeicher 4 beziehungsweise thermischen Netz erfassten und geglätteten thermischen Verbrauch.

Hierbei ist an der Abszisse 101 des dargestellten Diagramms die Zeit in beliebigen Einheiten aufgetragen. An der Ordinate 102 des dargestellten Diagramms ist der thermische Verbrauch (als thermische Leistung) in beliebigen Einheiten, beispielsweise in Kilowatt aufgetragen.

Eine Kurve 50 korrespondiert zum erfassten zeitlich abhängigen thermischen Verbrauch. Der thermische Verbrauch 50 weist ein unregelmäßiges Verhalten mit großen Variationen beziehungsweise Schwankungen (Zacken) auf. Dieser ist somit für eine Vorhersage des thermischen Verbrauchs mittels des Energiemanagementsystems 2, beispielsweise als Wärmeerzeugungsprofil, nicht besonders vorteilhaft. Ein verbessertes Profil beziehungsweise ein verbesserter Verlauf des thermischen Verbrauches 50 kann mittels einer Glättung erreicht werden. Hierbei wird der thermische Verbrauch 50 zeitlich geglättet. Hierdurch ergibt sich die Kurve 51. Mit anderen Worten zeigt die Kurve 51 den geglätteten thermischen Verbrauch 50. Die Kurve 51 kann als Wärmeerzeugungsprofil für das Energiemanagementsystems 2, beispielsweise zur Vorhersage des thermischen Verbrauchs, herangezogen werden. Dadurch wird die Vorhersage des thermischen Verbrauchs mittels des Energiemanagementsystems verbessert. Entscheidend hierfür ist, dass das thermische Netz als thermische Energiespeicher 4 interpretiert und erkannt wird.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Erzeugung thermische Gesamtenergie
- 2: Energiemanagementsystem
- 3: Messung
- 4: thermischer Energiespeicher
- 10: Energiesystem
- 42: Erfassung thermische Lade- und Entladeenergie
- 50: thermischer Verbrauch
- 51: geglätteter thermischer Verbrauch
- 101: Abszisse
- 102: Ordinate

## Patentansprüche

1. Verfahren zur Ermittlung eines thermischen Verbrauches (50, 51) eines Energiesystems (10) mit einem thermischen Energiespeicher (4), wobei der thermische Energiespeicher (4) wenigstens teilweise durch ein thermisches Netz des Energiesystems (10) ausgebildet wird, wobei das Energiesystems (10) eine thermische Gesamtenergie (1) wenigstens innerhalb eines Zeitbereiches erzeugt, umfassend die Schritte:
- Erfassen (42) einer thermischen Ladeenergie des thermischen Energiespeichers (4) innerhalb des Zeitbereiches;
- Erfassen (42) einer thermischen Entladeenergie des thermischen Energiespeichers (4) innerhalb des Zeitbereiches; und
- Berechnen des thermischen Verbrauches (50, 51) innerhalb des Zeitbereiches mittels wenigstens einer Summe aus der thermischen Gesamtenergie und der Differenz zwischen der erfassten thermischen Entladeenergie und der erfassten thermischen Ladeenergie.

2. Verfahren gemäß Anspruch 1, bei dem das Energiesystem (10) basierend auf den ermittelten thermischen Verbrauch (50, 51) betrieben wird.

3. Verfahren gemäß Anspruch 2, bei dem der thermische Verbrauch (50, 51) mittels eines Energiemanagementsystems (2) ermittelt wird, und bei dem der Betrieb des Energiesystems (10) durch das Energiemanagementsystem (2) erfolgt.

4. Verfahren gemäß Anspruch 3, bei dem der berechnete thermische Verbrauch (50, 51) als thermisches Lastprofil für eine thermische Lastvorhersage des Energiemanagementsystems (2) verwendet wird.

5. Verfahren gemäß Anspruch 4, bei dem der berechnete thermische Verbrauch (50, 51) vor seiner Verwendung als thermisches Lastprofil zeitlich geglättet wird.

6. Verfahren gemäß einem der vorhergehenden Ansprüche, bei dem die Entladeenergie und/oder Ladeenergie des thermischen Netzes durch eine Berücksichtigung des Volumens und/oder Temperatur eines Vorlaufes und eines Rücklaufes des thermischen Netzes erfasst wird.

7. Verfahren gemäß einem der vorhergehenden Ansprüche, bei dem die thermische Ladeenergie des thermischen Netzes und/oder die thermische Entladeenergie durch ein Erfassen eines Temperaturunterschiedes zwischen zwei verschiedenen Zeitpunkten erfasst wird.

8. Energiemanagementsystem (2) zum Betrieb eines Energiesystems (10) und/oder zur Vorhersage eines thermischen Verbrauches (50, 51) des Energiesystems, wobei das Energiesystem (10) wenigstens einen thermischen Energiespeicher (4) umfasst, wobei der thermische Energiespeicher (4) wenigstens teilweise als thermisches Netz ausgebildet ist,
und mittels des Energiesystems (10) wenigstens eine thermische Gesamtenergie (1) wenigstens innerhalb eines Zeitbereiches erzeugbar ist, umfassend
- Mittel zum Erfassen (42) einer thermischen Ladeenergie des thermischen Energiespeichers (4) innerhalb des Zeitbereiches;
- Mittel zum Erfassen (4) einer thermischen Entladeenergie des thermischen Energiespeichers (4) innerhalb des Zeitbereiches; und
- Mittel zum Berechnen des thermischen Verbrauches (50) innerhalb des Zeitbereiches mittels einer Summe aus der thermischen Gesamtenergie und der Differenz zwischen der erfassten thermischen Entladeenergie und der erfassten thermischen Ladeenergie.

9. Energiesystem (10), **dadurch gekennzeichnet, dass** dieses ein Energiemanagementsystem (2) gemäß Anspruch 8 umfasst.

10. Energiesystem (10) gemäß Anspruch 9, **dadurch gekennzeichnet, dass** das thermische Netz einen Vorlauf und einen Rücklauf aufweist, wobei die thermische Ladeenergie und thermische Entladeenergie durch wenigstens eine Messung einer Temperatur des Vorlaufs und/oder des Rücklaufs erfassbar ist.

## Claims

1. Method for determining the thermal consumption (50, 51) of an energy system (10) having a thermal energy storage unit (4), wherein the thermal energy storage unit (4) is formed at least partially by a thermal network of the energy system (10), wherein the energy system (10) generates a total thermal energy (1) at least within a time range, comprising the following steps:
- ascertaining (42) a thermal charging energy of the thermal energy storage unit (4) within the time range;
- ascertaining (42) a thermal discharging energy of the thermal energy storage unit (4) within the time range; and
- calculating the thermal consumption (50, 51) within the time range by way of at least one sum of the total thermal energy and the difference between the ascertained thermal discharging energy and the ascertained thermal charging energy.

2. Method according to Claim 1, in which the energy system (10) is operated based on the determined thermal consumption (50, 51).

3. Method according to Claim 2, in which the thermal consumption (50, 51) is determined by way of an energy management system (2), and in which the energy system (10) is operated by the energy management system (2).

4. Method according to Claim 3, in which the calculated thermal consumption (50, 51) is used as a thermal load profile for a thermal load prediction of the energy management system (2) .

5. Method according to Claim 4, in which the calculated thermal consumption (50, 51) is temporally smoothed before it is used as a thermal load profile.

6. Method according to one of the preceding claims, in which the discharging energy and/or charging energy of the thermal network is ascertained by taking into consideration the volume and/or temperature of an outward flow and a return flow of the thermal network.

7. Method according to one of the preceding claims, in which the thermal charging energy of the thermal network and/or the thermal discharging energy is ascertained by ascertaining a temperature difference between two different times.

8. Energy management system (2) for operating an energy system (10) and/or for predicting the thermal consumption (50, 51) of the energy system, wherein the energy system (10) comprises at least one thermal energy storage unit (4), wherein the thermal energy storage unit (4) is formed at least partially as a thermal network,
and at least one total thermal energy (1) is able to be generated at least within a time range by way of the energy system (10), comprising
- means for ascertaining (42) a thermal charging energy of the thermal energy storage unit (4) within the time range;
- means for ascertaining (4) a thermal discharging energy of the thermal energy storage unit (4) within the time range; and
- means for calculating the thermal consumption (50) within the time range by way of a sum of the total thermal energy and the difference between the ascertained thermal discharging energy and the ascertained thermal charging energy.

9. Energy system (10), **characterized in that** it comprises an energy management system (2) according to Claim 8.

10. Energy system (10) according to Claim 9, **characterized in that** the thermal network has an outward flow and a return flow, wherein the thermal charging energy and thermal discharging energy is able to be ascertained through at least one measurement of a temperature of the outward flow and/or the return flow.

## Revendications

1. Procédé de détermination d'une consommation (50, 51) thermique d'un système (10) d'énergie comprenant un accumulateur (4) d'énergie thermique, dans lequel l'accumulateur (4) d'énergie thermique est constitué au moins en partie d'un réseau thermique du système (10) d'énergie, dans lequel le système (10) d'énergie produit une énergie (1) thermique d'ensemble au moins dans un laps de temps, comprenant les stades :
- détection (42) d'une énergie thermique de charge de l'accumulateur (4) d'énergie thermique dans le laps de temps ;
- détection (42) d'une énergie thermique de décharge de l'accumulateur (4) d'énergie thermique dans le laps de temps ; et
- calcul de la consommation (50, 51) thermique dans le laps de temps au moyen d'au moins une somme de l'énergie thermique d'ensemble et de la différence entre l'énergie thermique de décharge détectée et l'énergie thermique de charge détectée.

2. Procédé suivant la revendication 1, dans lequel on fait fonctionner le système (10) d'énergie sur la base de la consommation (50, 51) thermique déterminée.

3. Procédé suivant la revendication 2, dans lequel on détermine la consommation (50, 51) thermique au moyen d'un système (2) de gestion d'énergie, et dans lequel le fonctionnement du système (10) d'énergie s'effectue par le système (2) de gestion d'énergie.

4. Procédé suivant la revendication 3, dans lequel on utilise la consommation (50, 51) thermique calculée comme profil thermique de charge pour une prévision thermique de charge du système (2) de gestion d'énergie.

5. Procédé suivant la revendication 4, dans lequel on lisse dans le temps la consommation (50, 51) thermique calculée avant son utilisation comme profil thermique de charge.

6. Procédé suivant l'une des revendications précédentes, dans lequel on détecte l'énergie de décharge et/ou l'énergie de charge du réseau thermique en prenant en compte le volume et/ou la température d'une avance et d'un retour du réseau thermique.

7. Procédé suivant l'une des revendications précédentes, dans lequel on détecte l'énergie thermique de charge du réseau thermique et/ou l'énergie technique de décharge par une détection d'une différence de température entre deux instants différents.

8. Système (2) de gestion d'énergie pour faire fonctionner un système d'énergie et/ou pour prévoir une consommation (50, 51) thermique du système d'énergie, dans lequel le système (10) d'énergie comprend au moins un accumulateur (4) d'énergie thermique, dans lequel l'accumulateur (4) d'énergie thermique est constitué au moins en partie en réseau thermique,
et, au moyen du système (10) d'énergie, au moins une énergie (1) thermique d'ensemble peut être produite au moins dans un laps de temps, comprenant
- un moyen de détection (42) d'une énergie thermique de charge de l'accumulateur (4) d'énergie thermique dans le laps de temps ;
- un moyen de détection (4) d'une énergie thermique de décharge de l'accumulateur (4) d'énergie thermique dans le laps de temps ;
- un moyen de calcul de la consommation (50) thermique dans le laps de temps au moyen d'une somme de l'énergie thermique d'ensemble et de la différence entre l'énergie thermique de décharge détectée et l'énergie thermique de charge détectée.

9. Système (10) d'énergie, **caractérisé en ce que** celui-ci comprend un système (2) de gestion de l'énergie suivant la revendication 8.

10. Système (10) d'énergie suivant la revendication 9, **caractérisé en ce que** le réseau thermique a une avance et un retour, dans lequel l'énergie thermique de charge et l'énergie thermique de décharge peuvent être détectées par au moins une mesure d'une température de l'avance et/ou du retour.
